(19) Europäisches Patentamt
European Patent Office
Office européen des brevets

(11) Publication number: **0 146 268**
**B1**

(12) # EUROPEAN PATENT SPECIFICATION

(45) Date of publication of patent specification: **08.06.88**

(51) Int. Cl.$^4$: **A 61 D 1/16**

(21) Application number: **84307987.2**

(22) Date of filing: **16.11.84**

(54) **Magnet for catching thereon foreign bodies within the reticulum of ruminant, and method and instrument for manufacture thereof.**

(30) Priority: **17.11.83 JP 215024/83**

(43) Date of publication of application:
**26.06.85 Bulletin 85/26**

(45) Publication of the grant of the patent:
**08.06.88 Bulletin 88/23**

(84) Designated Contracting States:
**DE FR GB IT**

(56) References cited:
**US-A-1 484 619**
**US-A-3 005 458**
**US-A-3 153 177**

(73) Proprietor: **DENKA SEIYAKU KABUSHIKI KAISHA trading as Denka Pharmaceutical Co., Ltd.**
**19-11, Nakase 3-chome Kawasaki-ku**
**Kawasaki-shi Kanagawa-ken (JP)**

(72) Inventor: **Imamura, Hironori**
**17529 Higashi-kaminaka Sadohara**
**Miyazaki-gun Miyazaki-ken (JP)**
Inventor: **Kawaguchi, Mamoru**
**Irifune-Higashi Estate 1-703 39-1, Irufune**
**Urayasu-shi Chiba-ken (JP)**

(74) Representative: **Fane, Christopher Robin King et al**
**HASELTINE LAKE & CO. Hazlitt House 28**
**Southampton Buildings Chancery Lane**
**London, WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 146 268 B1**

## Description

The present invention relates to a multi-polar magnet used, for example, for catching by magnetic attractive force metallic foreign bodies having entered into the reticulum of a ruminant, particularly cattle, and also relates to a method and a device for manufacturing such a magnet.

When a ruminant, cattle in particular, eats feed, it often eats by mistake metallic foreign bodies, such as wire, nails, etc having sharp edges, admixed with the feed. It swallows such metallic foreign bodies without masticating the same due to its own behavior. The metallic foreign bodies substantially comprise iron scraps and are collected in the reticulum of cattle by the movement of the paunch thereof. The reticulum serves not only to effect a chemical action but also to repeat vigorous contraction and relaxation for the purpose of mechanically mixing the feed. Owing to the aforementioned vigorous contraction, the metallic foreign bodies lying on the bottom of the reticulum often pierce through or perforate the walls thereof to thereby injure important adjacent organs, such as the diaphragm, pericardium, myocardium, liver, spleen, etc. Such injuries can afflict a number of cattle, and may in consequence cause difficulties to the owners of such cattle.

In order to prevent such injuries as described above, due to the presence of metallic foreign bodies, from occurring, there has heretofore been adopted oral administration into the reticulum of cattle of a bar magnet, such as that having grooves formed in the outer circumference thereof in the lengthwise direction, for example as disclosed in US-A-3,005,458. This bar magnet can catch by magnetic attraction the metallic foreign bodies thereon to reduce the injuries to some extent.

However, since a conventional permanent magnet has the north and south poles on the opposite ends thereof, enjoys high remanence in intensity only at the opposite ends, exhibits sudden reduction in magnetic attraction toward the center thereof, and little possesses desired remanence at the intermediate portion thereof, the metallic foreign bodies, caught on the surface of the magnet within the reticulum of a ruminant project from the opposite ends of the magnet. As a result, the magnet comes to increase in length and to gain sharp leading ends, these sharp leading ends being liable to pierce through the walls of the reticulum.

According to a first aspect of the present invention, there is provided an elongate longitudinally-magnetized monolithic permanent magnet, characterised in that the magnetization varies along the magnet so that a plurality of lateral magnetic poles exist at respective different locations between the two ends of the magnet, which poles alternate north and south along the magnet.

According to a second aspect of the present invention, there is provided a method of manufacturing a permanent magnet, wherein an elongate monolithic body of magnetizable material is arranged within an electrical coil contained within a magnetic yoke and direct current is passed through the coil so as to magnetize the said body longitudinally, characterised in that the said body is provided with at least one annular metallic member which, during the magnetization, fits closely around that body at a location between its opposite ends and is of higher magnetic permeability than that body, thereby to bring about variation of the magnetization along the said body so that a plurality of lateral magnetic poles exist at respective different locations between the two ends of the resulting magnet, which poles alternate north and south along the magnet.

According to a third aspect of the present invention there is provided, in combination with an elongate monolithic body of magnetizable material to be magnetized in a method according to the preceding paragraph, an annular metallic member adapted to fit closely around that body at a location between its opposite ends, and being of higher magnetic permeability than that body, so as to be capable of bringing about the variation of magnetization as specified in the preceding paragraph.

A magnet embodying one aspect of the present invention can be used to catch thereon by magnetic attraction metallic foreign bodies within the reticulum of a ruminant, since such a magnet has magnetic poles at respective different locations between the two ends of the magnet. Thus, even when the magnet catches metallic foreign bodies on the opposite ends thereof in a state wherein the metallic foreign bodies protrude from the opposite ends of the magnet, only a slight force exerted thereon causes such bodies to be slid onto the sides of the magnet and adhered intimately to the side walls of the magnet in the lengthwise direction, thereby making it possible for the magnet to function effectively, to have substantially large magnetic attraction and to prevent the adverse injuries from occurring.

Reference will now be made by way of example, to the accompanying drawings wherein:-

FIG. 1 is an explanatory cross-sectional view illustrating a magnet-manufacturing method embodying one aspect of the present invention;

FIG. 2 is a diagram showing the distribution of magnetic flux;

FIG. 3 is a further diagram showing the distribution of magnetic flux;

FIG. 4 is a diagram showing the distribution of magnetic flux assumed by a prior art magnet;

FIG. 5 is a graph showing the distribution of magnetic flux on the side surface of the magnet manufactured by the method illustrated in FIG. 1;

FIGS. 6(a) to 6(c) are explanatory views showing the arrangements of the magnetic poles obtained by different magnetizing methods embodying one aspect of the present invention;

FIGS. 7(a) through 7(d) are explanatory views showing examples of use of multipolar magnet-manufacturing devices embodying another aspect of the present invention;

FIG. 8 is a graph showing the relationship between the position of the side surface of the magnet and the remanence in the cases of FIGS. 7(a) and 7(b);

FIG. 9 is a graph showing the relationship between the position of the side surface of the magnet and the remanence in the cases of FIGS. 7(c) and 7(d);

FIG. 10 is a perspective view showing a magnet which has grooves formed therein; and

FIG. 11 is a perspective view showing a device for manufacturing the magnet shown in FIG. 10.

The present invention has been accomplished in consequence of earnest studies on a method for the application of magnetism and keen attention to the fact that intensive remanence is present on the portions of a material to be magnetized into and out of which a large quantity of magnetic flux flows when magnetism is applied to the material. To be specific, manufacture of a multipolar magnet composed of a single material is achieved by bringing metallic members having magnetic permeability higher than that of a material to be magnetized into locally intimate contact with the periphery of the material, applying magnetism to the material, thereby allowing the magnetic flux to flow into the metallic members locally disposed around the material, and consequently allowing the magnetic flux to repeatedly flow into and out of the material.

The material to be magnetized in the present invention is monolithic, i.e. integrally formed of a single material such, as alnico, ferrite or any other material suitable for a permanent magnet, and may be of a circle or counterweight in cross section, an annular shape, or any shape having concaves or the like.

Magnetism is applied to the material to be magnetized by an ordinary method which comprises putting within a yoke the material having an excitation coil wound therearound and applying direct current to the excitation coil. At this time, however, according to an embodiment of one aspect of the present invention, metallic members having magnetic permeability much higher than that of the material (members of pure iron, for example) are locally attached closely to the material. This attachment can be achieved by fitting rings of pure iron intermittently around the material when the material is of a bar shape. The portions of the material not having any metallic member attached thereto may either be left exposed to the atmosphere or be surrounded by a member of magnetic impermeability, such as foamed or foamless plastic members, wooden members, ceramic members, for example. In the latter case, it is possible to manufacture a permanent magnet having any desired distribution of magnetic poles by preparing in advance a container having an inside space which conforms to the shape of a material to be magnetized and which has a pattern comprising portions of high magnetic permeability and portions of magnetic impermeability, setting the material in position within the container, and subjecting the material to magnetization.

A magnet embodying the present invention is applicable not only to a case where extraneous substances within the reticulum of a ruminant are caught by magnetic attraction, but also to cases where uniform magnetic attraction along the length of the magnet, and/or a plurality of lateral magnetic poles at respective different locations between the two ends of the magnet, are desired.

The present invention will now be described with reference to the illustrated embodiments.

In FIG. 1, reference numeral 1 denotes a material to be magnetized, 2 annular metallic members comprising rings of pure iron, 4 annular metallic members comprising bottomed sleeves of pure iron, 5 an excitation coil, and 6 an iron yoke. In this embodiment, the material 1 is made of bar-shaped alnico V, about 74 mm in length. Three rings 2 are fitted around the material 1 at a given interval 3, and two sleeves 4 are also fitted around the material 1 so that the opposite ends of the material 1 reach the bottoms of the sleeves 4 respectively, and are separated from the adjacent rings 2 at the same interval 3. To achieve magnetization of the material 1, direct current of 2 to 4 KA is applied instantaneously to the excitation coil 5 within the yoke 6.

The distribution of magnetic flux immediately after the application of magnetism is analyzed by the finite element method and shown in FIG. 2. The magnetic flux distribution of the permanent magnet thus manufactured is analyzed by the finite element method and shown in FIG. 3. For the purpose of comparison with FIG. 3, FIG. 4 shows the magnetic flux distribution of a permanent magnet produced by a prior art method which does not use annular metallic members.

FIG. 5 shows the distribution of the flux density in the atmosphere 0.8 mm distant from the side surface of the magnet. The lateral axis in this graph is graduated for the distance from the center of the magnet. The flux density distribution obtained by application of magnetism according to a prior art method which does not use annular metallic members is also shown by a broken line in FIG. 5 for reference.

Examples of the relationship between the arrangement of the iron rings 2, including iron sleeves, at the time magnetism is applied to the material 1 and the arrangement of the annular lateral magnetic poles of the bar magnet manufactured are shown in FIGS. 6(a), 6(b) and 6(c) The number of the rings, including the sleeves, may be increased to five, ten, twenty or more. This increase makes it possible to obtain a magnet having substantially uniform magnetic attraction.

FIGS. 7(a) to 7(d) show examples in which various shapes of pure iron rings, including pure iron sleeves, are attached to a magnetized material which is made of alnico V, 73.5 mm in length and 12 mm in diameter. Each of the examples shown in FIGS. 7(a) to 7(d) is subjected to excitation by applying direct current of 3 KA to a coil wound 30 times around the material to be magnetized within a yoke of pure iron. The results of the treatment conducted on the examples of FIGS. 7(a) and 7(b) and those concerning the examples of FIGS. 7(c) and 7(d) are respectively shown in FIGS. 8 and 9, each showing the relationship between the position of the side surface of the magnet and the remanence. The lateral axis in each of FIGS. 8 and 9 is graduated for the distance from the center of the magnet. The remanence distribution obtained by a prior art magnetism-applying method which does not employ an annular metallic member is shown by a broken line in each of FIGS. 8 and 9 for comparison with the results obtained in accordance with the present invention. Further, the positions of contact between the ring and the magnet body are shown by (a) corresponding to the example of FIG. 7(a) and by (b) corresponding to the example of FIG. 7(b) below the graph in FIG. 8. Denoted by (ab) is the case where the ring is fitted around a magnetized material at a position lying midway between the position in FIG. 7(a) and the position in FIG. 7(b).

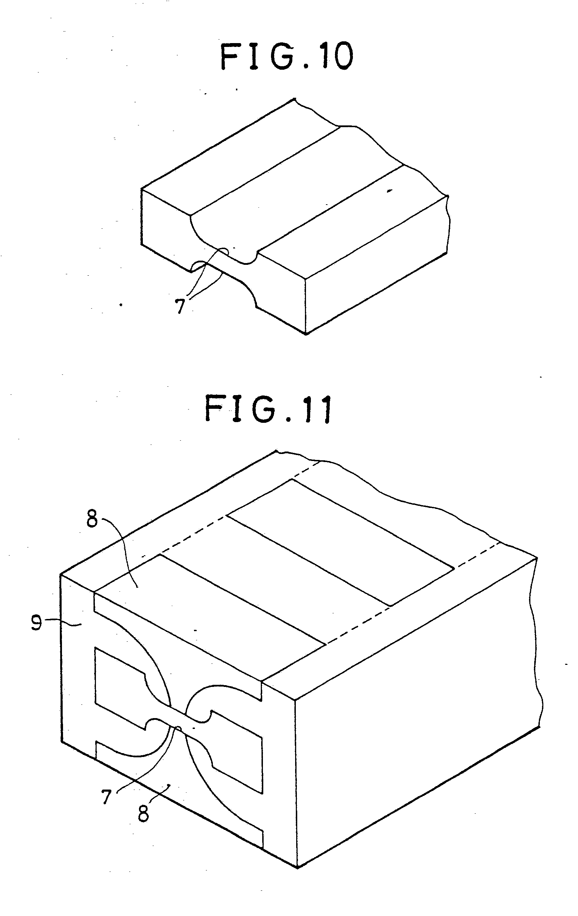

When it is desired to give intensive magnetic attraction to the bottoms of grooves 7 of a bar magnet as shown in FIG. 10, iron members 8 are intermittently disposed to contact the bottoms of the grooves 7 and the remaining portions of the bar magnet are surrounded by a foaming polystyrene member 9 as shown in FIG. 11. In this state, excitation is effected by the use of a yoke and an excitation coil to obtain a bar magnet having south and north poles arranged alternately on the bottoms of the grooves. When a continuous iron member 8 is used as shown by a broken line in FIG. 11, for example, the bottoms of the grooves 7 do not, have alternate south and north poles, but can exhibit high magnetic flux density as a whole.

## Claims

1. An elongate longitudinally-magnetized monolithic permanent magnet (1), characterised in that the magnetization varies along the magnet (1) so that a plurality of lateral magnetic poles (N, S) exist at respective different locations between the two ends of the magnet (1), which poles alternate north and south along the magnet.

2. A magnet as claimed in claim 1, wherein the said magnetic poles (N, S) are spaced substantially equidistantly.

3. A magnet as claimed in claim 1 or 2, wherein there are at least two north poles (N) and at least two south poles (S).

4. A magnet as claimed in claim 3, wherein there are three north poles (N) and three south poles (S).

5. A method of manufacturing a permanent magnet, wherein an elongate monolithic body (1) of magnetizable material is arranged within an electrical coil (5) contained within a magnetic yoke (6) and direct current is passed through the coil so as to magnetize the said body (1) longitudinally, characterised in that the said body (1) is provided with at least one annular metallic member (2) which, during the magnetization, fits closely around that body (1) at a location between its opposite ends and is of higher magnetic permeability than that body (1), thereby to bring about variation of the magnetization along the said body (1) so that a plurality of lateral magnetic poles (N, S) exist at respective different locations, between the two ends of the resulting magnet (1), which poles alternate north and south along the magnet.

6. In combination with an elongate monolithic body (1) of magnetizable material to be magnetized in a method according to claim 5, an annular metallic member (2) adapted to fit closely around that body (1) at a location between its opposite ends, and being of higher magnetic permeability than that body (1), so as to be capable of bringing about the variation of magnetization as specified in claim 5.

7. A method as claimed in claim 5, or a combination as claimed in claim 6, wherein the said annular metallic member (2) is made of pure iron.

8. A method or combination, as the case may be, as claimed in claim 5, 6 or 7, wherein there are at least two such annular metallic members (2).

9. The use of a magnet according to claim 1 to catch thereon by magnetic attraction metallic foreign bodies within the reticulum of a ruminant.

10. A magnet, method, or use, as the case may be, as claimed in any one of claims 1 to 5 or 7 to 9, wherein the said magnet (1) is made of alnico.

11. A magnet, method, or use, as the case may be, as claimed in any one of claims 1 to 5 or 7 to 9, wherein the said magnet (1) is made of ferrite.

## Patentansprüche

1. Länglicher, längsmagnetisierter, monolithischer Permanentmagnet (1), dadurch gekennzeichnet, daß die Magnetisierung längs des Magneten (1) variiert, so daß mehrere seitliche Magnetpole (N, S) an jeweiligen unterschiedlichen Stellen zwischen den beiden Enden des Magneten (1) existieren, wobei die Pole Nord und Süd längs des Magneten einander abwechseln.

2. Magnet nach Anspruch 1, bei dem die Magnetpole (N, S) im wesentlichen äquidistant voneinander entfernt sind.

3. Magnet nach Anspruch 1 oder 2, bei dem mindestens zwei Nord-pole (N) und mindestens zwei Süd-pole (S) vorhanden sind.

4. Magnet nach Anspruch 3, bei dem drei Nord-pole (N) und drei Süd-pole (S) vorhanden sind.

5. Verfahren zur Herstellung eines Permanent-Magneten, bei dem ein länglicher monolithischer Körper (1) aus magnetisierbarem Material innerhalb einer in einem Magnetjoch (6) enthaltenen elektrischen Wicklung (5) angeordnet ist und Gleichstrom durch die Wicklung geleitet wird, um den Körper (1) in Längsrichtung zu magnetisieren, dadurch gekennzeichnet, daß der Körper (1) mindestens ein ringförmiges Metallteil (2) aufweist, das während der Magnetisierung den Körper (1) an einer Stelle zwischen dessen entgegengesetzten Enden eng umfaßt und eine höhere magnetische Permeabilität als der Körper (1) aufweist, um dadurch Variation der Magnetisierung längs des Körpers (1) zu bewirken, so daß mehrere seitliche Magnetpole (N, S) an jeweiligen unterschiedlichen Stellen zwischen den beiden Enden des erzeugten Magneten existieren, wobei die Magnetpole Nord und Süd längs des Magneten einander abwechseln.

6. In Kombination mit einem länglichen monolithischen Körper (1) aus magnetisierbarem Material, der mit einem Verfahren nach Anspruch 5 magnetisiert werden soll: ein ringförmiges Metallteil (2), das in der Lage ist, den Körper (1) an einer Stelle zwischen dessen entgegengesetzten Enden eng zu umfassen und eine höhere magnetische permeabilität als der Körper (1) aufweist, um die Variation der Magnetisierung nach Anspruch 5 zu bewirken.

7. Verfahren nach Anspruch 5, oder Kombination nach Anspruch 6, wobei das ringförmige Metallteil (2) aus reinem Eisen hergestellt wird.

8. Verfahren bzw. Kombination nach Anspruch 5, 6 oder 7, wobei mindestens zwei ringförmige Metallteile (2) vorhanden sind.

9. Verwendung eines Magneten nach Anspruch 1, um Metall-Fremdkörper innerhalb des Netzmagens eines Wiederkäuers durch magnetische Anziehung an dem Magneten zu erfassen.

10. Magnet bzw. Verfahren bzw. Verwendung nach einem der Ansprüche 1 bis 5 oder 7 bis 9, wobei der Magnet (1) aus Alnico hergestellt ist.

11. Magnet bzw. Verfahren bzw. Verwendung nach einem der Ansprüche 1 bis 5 oder 7 bis 9, wobei der Magnet (1) aus Ferrit hergestellt ist.

**Revendications**

1. Un aimant permanent monolithique allongé (1) aimanté longitudinalement, caractérisé en ce que l'aimantation varie le long de l'aimant (1) de sorte que plusieurs pôles magnétiques latéraux (N, S) existent à différents endroits respectifs entre les deux extrémités de l'aimant (1), pôles qui sont alternés nord et sud le long de l'aimant.

2. Un aimant selon la revendication 1, dans lequel lesdits pôles magnétiques (N, S) sont espacés de manière sensiblement équidistante.

3. Un aimant selon l'une des revendications 1 ou 2, dans lequel il y a au moins deux pôles nord (N) et au moins deux pôles sud (S).

4. Un aimant selon la revendication 3, dans lequel il y a trois pôles nord (N) et trois pôles sud (S).

5. Un procédé de fabrication d'aimant permanent, dans lequel un corps monolithique allongé (1) en matériau aimantable est disposé à l'intérieur d'une bobine électrique (5) contenue dans une carcasse magnétique (6), et du courant continu étant amené à circuler à travers la bobine de manière à aimanter ledit corps (1) longitudinalement, caractérisé en ce que ledit corps (1) est pourvu d'au moins un élément métallique annulaire (2) qui, pendant l'aimantation, s'ajuste étroitement autour dudit corps (1) en une position située entre ses extrémités opposées et qui est d'une perméabilité magnétique supérieure à celle du corps (1), pour réaliser par ce moyen une variation de l'aimantation le long dudit corps (1), de façon à créer plusieurs pôles magnétiques latéraux (N, S) en différentes positions respectives entre les deux extrémités de l'aimant résultant (1), pôles qui sont alternés nord et sud le long de l'aimant.

6. En combinaison avec un corps monolithique allongé (1) en matériau aimantable destiné à être aimanté par un procédé selon la revendication 5, un élément métallique annulaire (2) adapté pour s'ajuster étroitement autour de ce corps (1) en une position située entre ses extrémités opposées et étant d'une perméabilité magnétique supérieure à celle de ce corps (1), de façon à être capable de réaliser la variation d'aimantation spécifiée à la revendication 5.

7 Un procédé selon la revendication 5 ou une combinaison. e selon la revendication 6, où l'élément métallique annulaire (2) est constitué de fer doux.

8. Un procédé ou une combinaison, selon les cas, en accord avec l'une des revendications 5, 6 ou 7, où il y a au moins deux tels éléments métalliques annulaires (2).

9. Utilisation d'un aimant selon la revendication 1 pour y faire adhérer par attraction magnétique des corps métalliques étrangers dans la caillette d'un ruminant.

10. Un aimant, un procédé ou une utilisation, selon les cas, en accord avec l'une des revendications 1 à 5 ou 7 à 9, ' où ledit aimant (1) est en alnico.

11. Un aimant, un procédé ou une utilisation, selon les cas, en accord avec l'une des revendications 1 à 5 ou 7 à 9, où ledit aimant (1) est en ferrite.

FIG.1

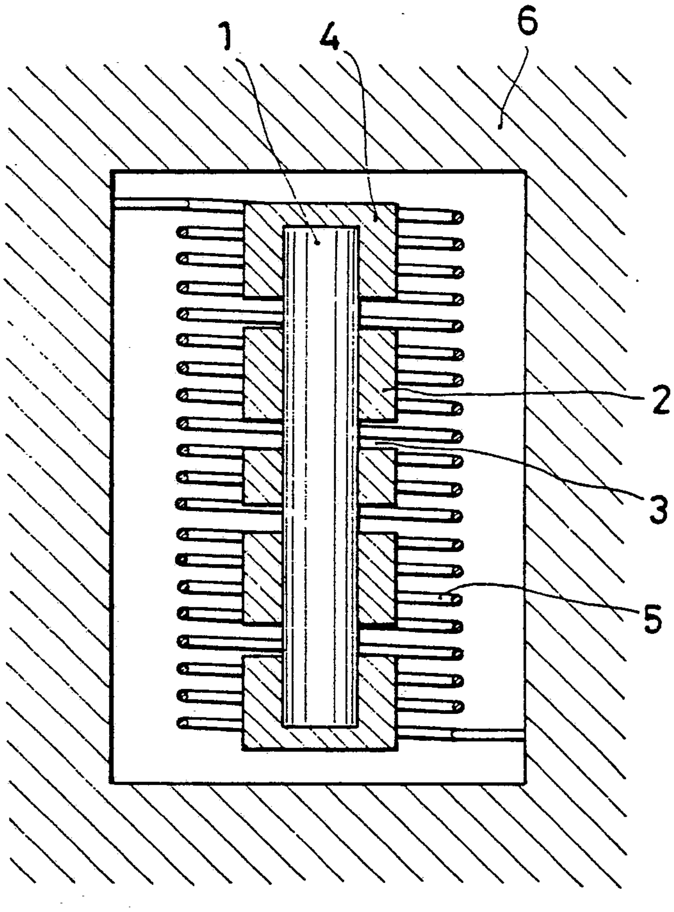

FIG. 2

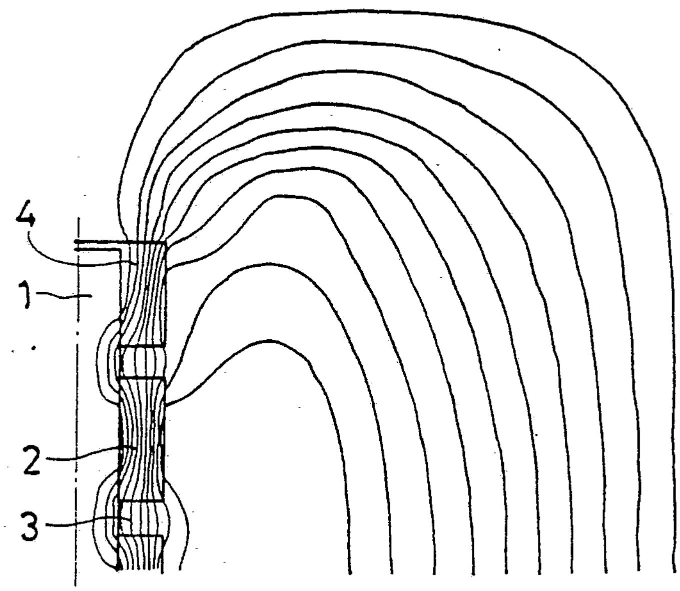


FIG. 3

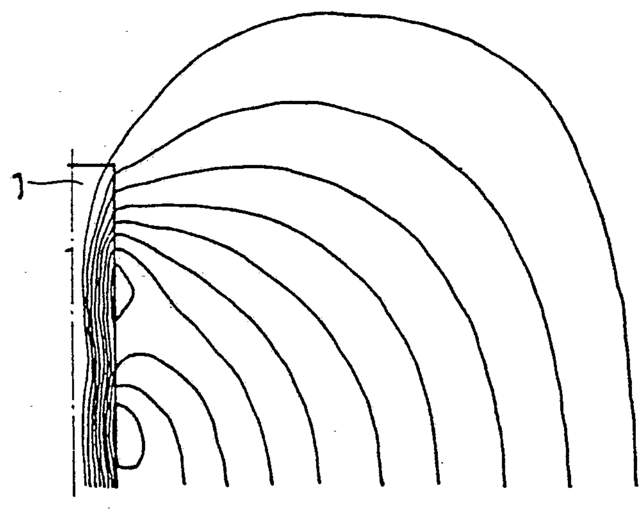

FIG.4

PRIOR ART

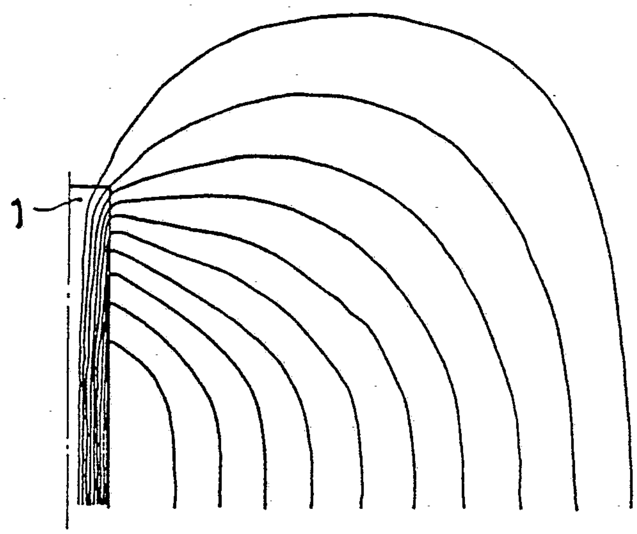


FIG.5

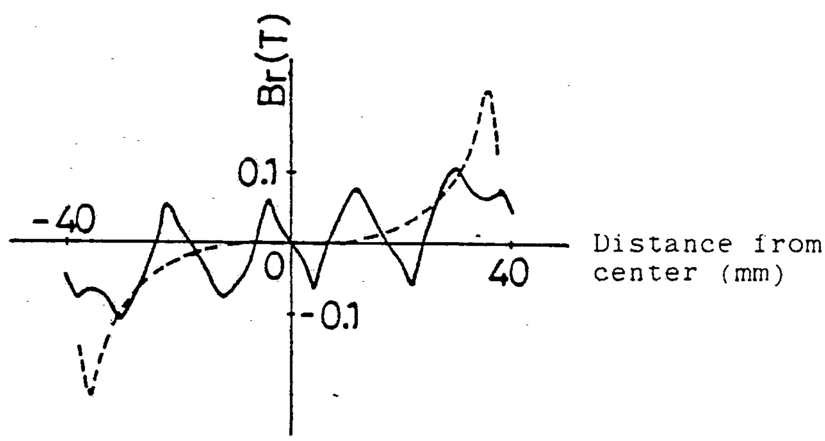

FIG.6 (a)

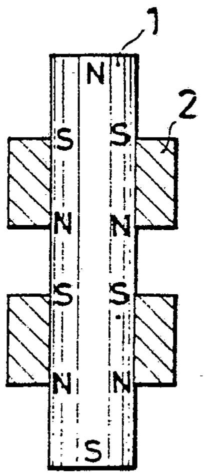


FIG.6(b)

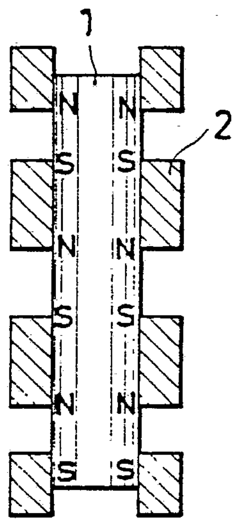


FIG.6(c)

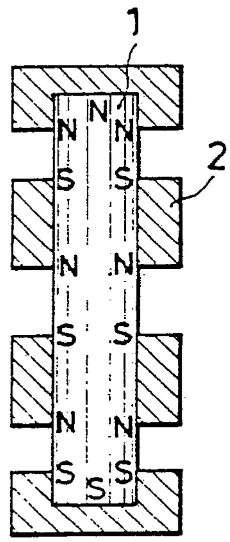


FIG.7(a)

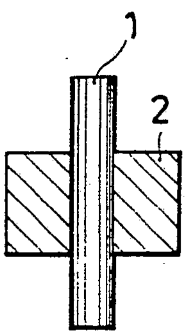


FIG.7(b)

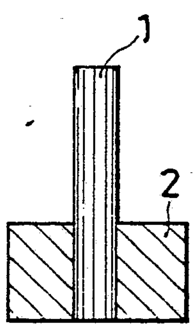


FIG.7(c)

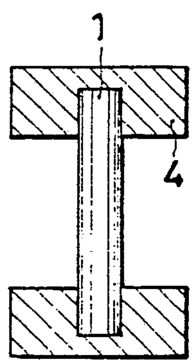


FIG.7(d)

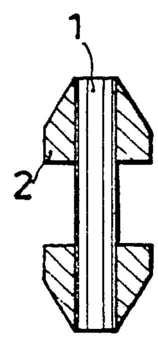

FIG.8

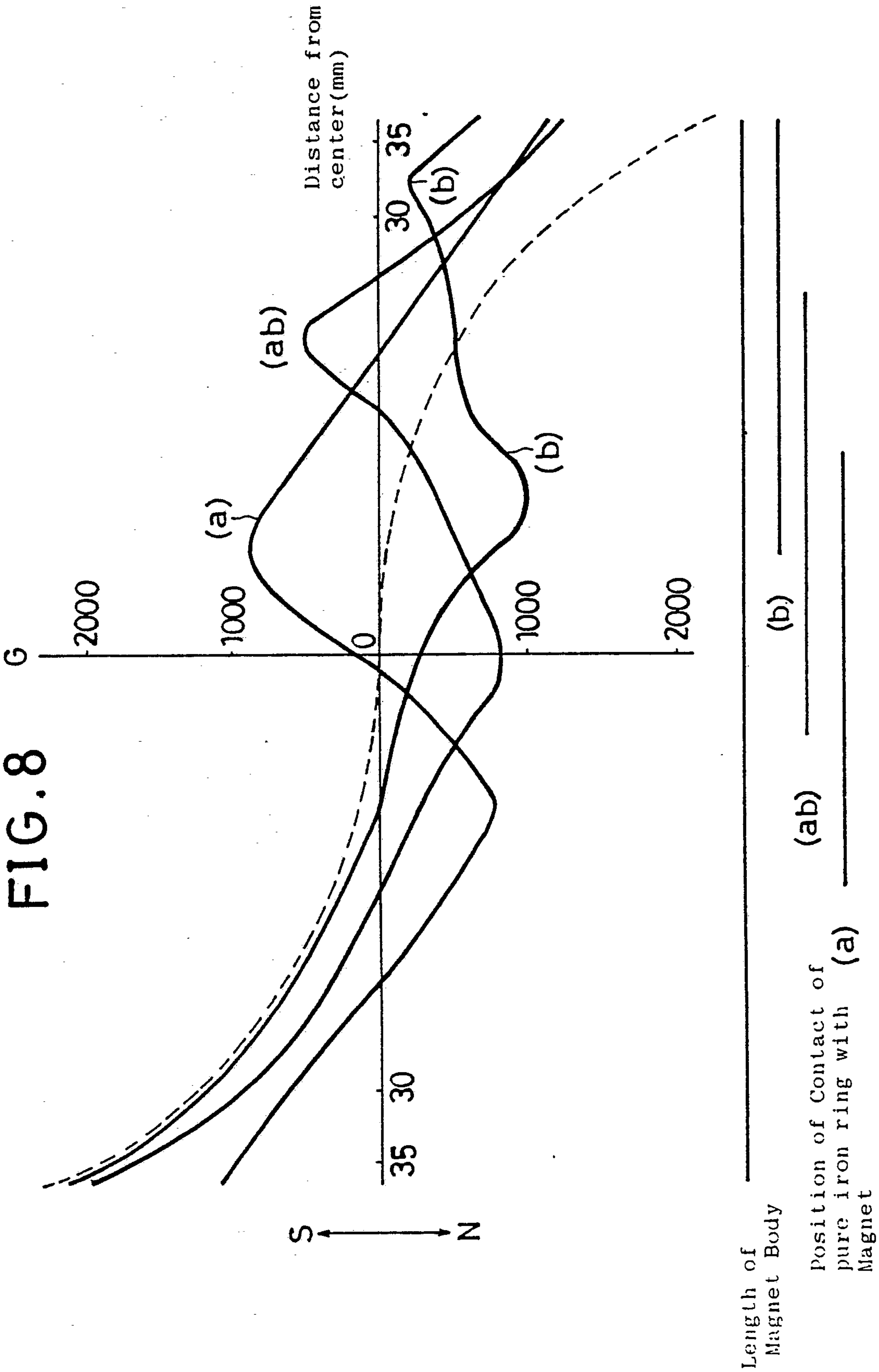
G
2000
1000
0
1000
2000
(a)
(ab)
(b)
(b)
30
35
30
35
Distance from center(mm)
S
N
Length of Magnet Body
Position of Contact of pure iron ring with Magnet
(a)
(ab)
(b)

FIG. 9

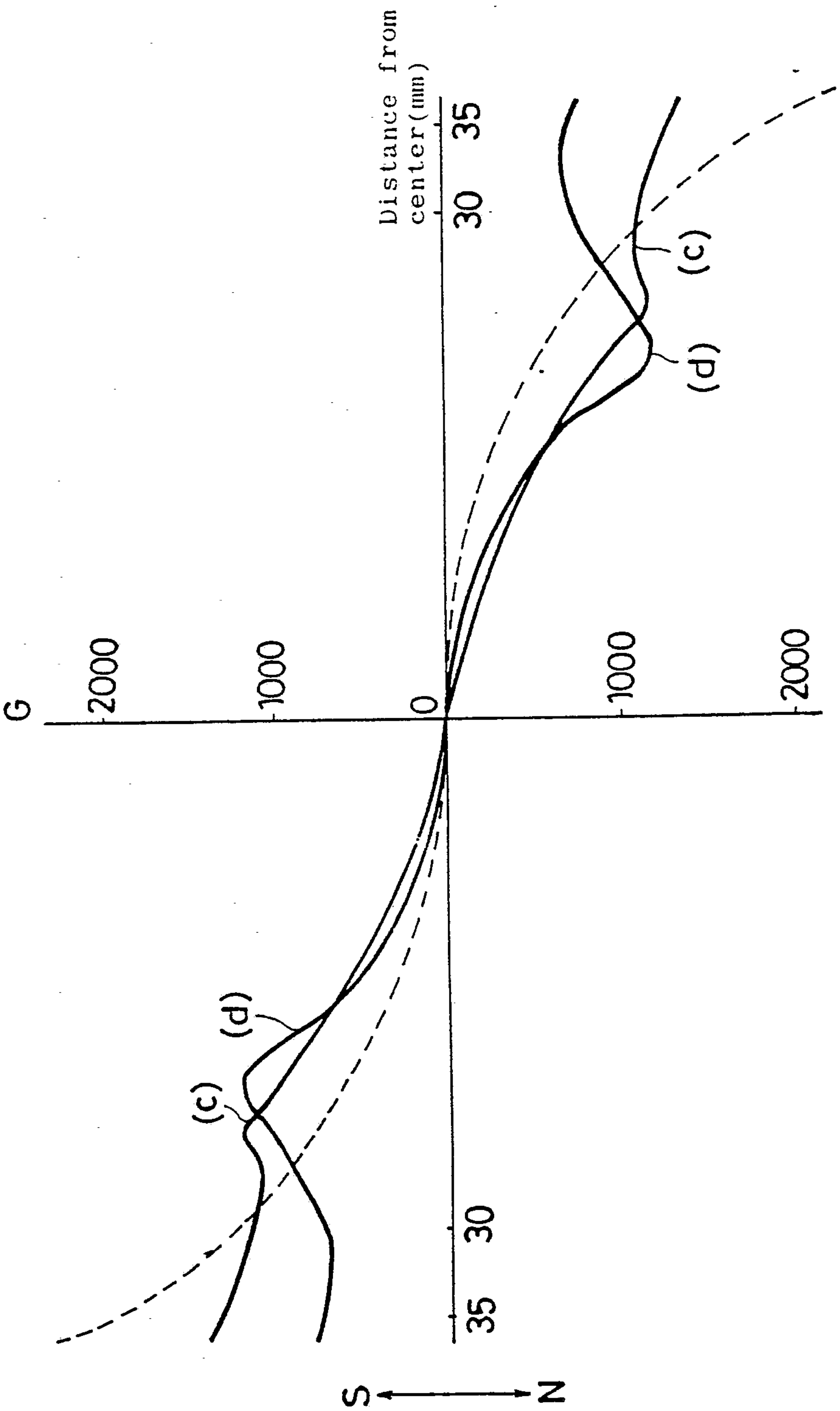
G
2000
1000
0
1000
2000
Distance from center(mm)
30
35
30
35
(c)
(d)
(d)
(c)
S
N

FIG.10

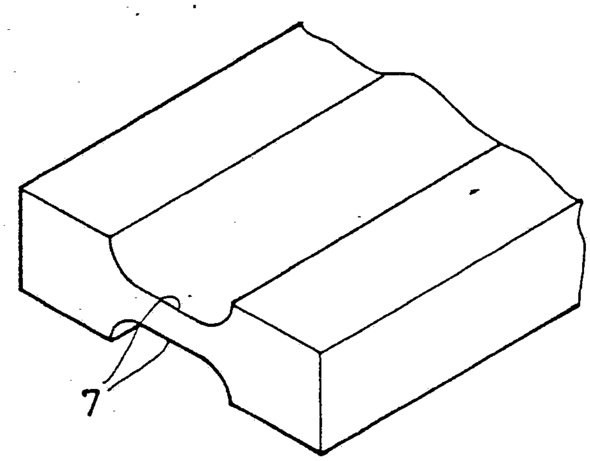


FIG.11